Europäisches Patentamt

European Patent Office

Office européen des brevets

(11) Publication number: 0 242 900 B1

# EUROPEAN PATENT SPECIFICATION

(45) Date of publication of patent specification: 24.07.91    (51) Int. Cl.⁵: C09K 5/00, C23F 11/08

(21) Application number: 87200512.9

(22) Date of filing: 19.03.87

(54) Corrosion-inhibiting heat-transfer composition.

(30) Priority: 20.03.86 GB 8606901

(43) Date of publication of application:
28.10.87 Bulletin 87/44

(45) Publication of the grant of the patent:
24.07.91 Bulletin 91/30

(84) Designated Contracting States:
AT BE CH DE ES FR GB IT LI NL SE

(56) References cited:
EP-A- 0 010 918
EP-A- 0 035 834
EP-A- 0 112 756

(73) Proprietor: SHELL INTERNATIONALE RE-
SEARCH MAATSCHAPPIJ B.V.
Carel van Bylandtlaan 30
NL-2596 HR Den Haag(NL)

(72) Inventor: Naarding, Peter Cornelis
Badhuisweg 3
NL-1031 CM Amsterdam(NL)
Inventor: Coleman, Brian
Badhuisweg 3
NL-1031 CM Amsterdam(NL)
Inventor: Shepley, John Douglas
Badhuisweg 3
NL-1031 CM Amsterdam(NL)

(74) Representative: Aalbers, Onno et al
P.O. Box 302
NL-2501 CH The Hague(NL)

## Description

The invention relates to a corrosion-inhibiting heat-transfer composition which can be used in cooling systems in e.g. domestic central heating equipment, motor vehicles and the like.

Corrosion is a well-known problem in the field of cooling systems. Under normal operating conditions, the metallic parts of the cooling systems which can contain a variety of metals, such as copper, solder, brass, steel, cast iron and aluminium, are susceptible to corrosion; consequently heat transfer compositions usually contain a corrosion inhibitor. Many corrosion inhibitors have already been proposed. Some of them contain nitrites, others contain amines. If two corrosion inhibitors are mixed, i.e. a nitrite is mixed with an amine, there is a chance that they form nitrosamines, some of which are believed to be carcinogenic.

In European patent specification No. 35,834 a composition is described which comprises neither nitrites nor amines, but which contains a triazole, an alkali metal borate as buffering agent, an alkali metal benzoate, an alkali metal silicate and an alkali metal salt of a $C_{7-13}$ dibasic organic acid. According to this specification the composition shows excellent anti-corrosion properties, when used in ethylene glycol. As suitable anti-corrosion compounds sodium benzoate and sebacate are mentioned.

It has now been found that superior corrosion inhibiting properties are obtained when the composition contains an aryl-or alkyl-substituted benzoic acid or an aromatic-substituted unsaturated carboxylic acid and an aliphatic $C_9$-dibasic organic acid.

Accordingly the invention provides a corrosion-inhibiting heat transfer composition comprising a water-miscible alcohol, a buffering agent, a salt of monobasic organic acid and a salt of a $C_{7-13}$ dibasic organic acid, characterised in that the salt of the monobasic acid is an alkali metal or ammonium salt of alkyl- or aryl-substituted benzoic acid or aromatic-substituted unsaturated carboxylic acid, and the salt of the dibasic acid is an alkali metal or ammonium salt of azelaic acid. Optionally alkali metal or ammonium hydroxide is present, whereby preferably the amount of alkali metal or ammonium hydroxide is selected such that upon dilution of the composition with water in a volume ratio composition:water between 1:1 and 1:4 the admixture has a pH-value between 7.5 and 9.5.

As substituted benzoic or aromatic-substituted unsaturated carboxylic acid many types of acid may be used. These acids include, e.g. naphthyl- and phenyl-substituted benzoic acid, but also pyridyl-substituted benzoic acid. A suitable example of an unsaturated acid is cinnamic acid. Preferably, however, the acid is an alkyl-substituted benzoic acid.

The alkyl-substituted benzoic acid should be soluble in the mixture, also after dilution with water. Hence, the alkyl moiety in this compound has preferably from 1 to 6 carbon atoms. In particular, a tert-butyl group is preferred. Although the compound may contain more than one alkyl or aryl substituent compounds having only one substituent are preferred. The aryl-or alkyl-substituent can be present on any position. Advantageously the substituent is positioned on the para or ortho position. When tert-butyl is the substituent it is preferably positioned on the para position, if it were alone for reasons regarding steric hindrance.

The ratio between the alkyl-substituted benzoic acid and the azelaic acid may vary within broad limits. The weight ratio preferably is from 1:5 to 5:1, in particular from 1:3 to 3:1, e.g. 1:1 in which the weight ratio is expressed as the acids weight ratio. The actual amount of the alkyl-substituted benzoic acid and the azelaic acid is advantageously selected from 0.05 to 5 pbw per 100 pbw of water-miscible alcohol for each acid, expressed as acid.

The buffering agent in the present composition may be selected from a range of known products, e.g. various types of weak organic acids, tris(hydroxymethyl) aminomethane, phosphates, and in particular borates. Preferably, the buffering agent is an alkali metal metaborate and/or tetraborate. The alkali metal metaborate and/or tetraborate includes the sodium and potassium salts, the sodium salt being preferred on cost grounds. Instead of using either metaborate or tetraborate (borax) it is also possible to use mixtures of these borates. The amount of buffering agent, thus in particular of alkali metal metaborate and/or tetraborate, is preferably between 0.1 and 5 pbw per 100 pbw of water-miscible alcohol.

Silicates and nitrates are often incorporated in heat-transfer fluids, as is apparent from e.g. European patent specification No. 35,834. They tend to protect aluminium parts of the cooling systems. Suitably, also the composition according to the invention contains an alkali metal silicate, in particular sodium silicate, preferably in an amount of from 0.05 to 5 pbw per 100 pbw of water-miscible alcohol, and an alkali metal nitrate. The alkali metal nitrate used is suitably a potassium or sodium nitrate. The amount in the composition is advantageous between 0.05 and 3 pbw of nitrate per 100 pbw of water-miscible alcohol.

The composition according to the invention may further contain other additives, e.g. anti-corrosion additives such as a triazole compound as indicated in the above European specification, an imidazole or thiazole compound, and/or anti-foam additives. Examples of anti-foam additives are silicone oils, polyglycols and alkoxylated alcohols. The amount of such additives may vary from 0.001 to 1 pbw per 100 pbw of water-miscible alcohol. The composition may also contain one or more dyes.

The water-miscible alcohol is preferably ethylene glycol, diethylene glycol or propylene glycol. However it is indicated that mixtures of such glycols and mixtures of one or more glycols with methanol, ethanol, propanol or butanol can very well be used. The composition according to the invention may be prepared in any convenient manner. This includes adding to the water-miscible alcohol in any suitable manner a plurality of components which form the composition according to the invention. The aryl- or alkyl-substituted benzoic acid, or aromatic-substituted unsaturated carboxylic acid and azelaic acid can be added to the water-miscible alcohol as acids, and subsequently be neutralised by the addition of an alkali metal or ammonium hydroxide. The amount hydroxide added in excess to the neutralization will suitably vary between 0 and 2 pbw per 100 pbw of water-miscible alcohol.

The composition as described above is excellently suitable for dilution with water to yield anti-freeze formulations for use in cooling systems of motor vehicles. The invention therefore also relates to anti-freeze compositions containing from 10 to 60% vol of the composition according to the invention and from 90 to 40% vol of water.

The invention will be illustrated by means of the following examples.

EXAMPLE 1

A basic composition was prepared containing:

| | |
|---|---|
| borax ($Na_2B_4O_7 \cdot 10H_2O$) | 1.5 %w |
| sodium meta silicate ($Na_2SiO_3 \cdot 5H_2O$) | 0.15 %w |
| sodium nitrate | 0.5 %w |
| tolyltriazole | 0.15 %w |
| antifoam | 0.01 %w |
| monoethylene glycol | balance |

To this basic composition various amounts of p-tert-butyl-benzoic acid (PTBB) and azelaic acid (AZA) were added, the amounts thereof being based on the basic composition. Subsequently, to the composition sodium hydroxide was added until the pH was 8.0

The compositions obtained were used in the Glassware test at 20% vol of the compositions in water, according to ASTM D 1384. The metal specimens were sandblasted (except solder which was treated with pumice powder), before being subjected to the test. The sandblasting and use of 20% diluted compositions serve to make test conditions more severe.

The results are indicated in Table I.

## TABLE I

| Average weight loss per specimen in mg (ASTM D1384 at 20%v) | | | | | | | |
|---|---|---|---|---|---|---|---|
| PTBB %w | AZA %w | Copper | Solder | Brass | Steel | Cast Iron | Aluminium |
| | | 2.2 | 118.2 | + 2.2 | 18.6 | 309.7 | 29.0 |
| 0.25 | 0.25 | 2.6 | 6.5 | 2.2 | 1.7 | 142.5 | 3.3 |
| 0.50 | 0.50 | 1.3 | 2.2 | 2.6 | 1.7 | 10.0 | 1.0 |
| 0.50 | 1.00 | 0.9 | 3.0 | 1.7 | 2.6 | 26.1 | 6.2 |
| 0.75 | 0.75 | 2.6 | 1.3 | 3.5 | 0.9 | 11.4 | 3.3 |
| 1.00 | 1.00 | 2.6 | 2.2 | 0.9 | 3.5 | 8.6 | 0.1 |
| 1.50 | – | 0.9 | 8.7 | 1.7 | 1.7 | 112.6 | 2.4 |
| – | 1.50 | 0.4 | 3.0 | 1.3 | 5.2 | 64.4 | 3.8 |

From the results it is apparent that both PTTB and AZA have a beneficial effect on the corrosion prevention (cf. first experiment in comparison with the two last). Further it appears that a combination of these acids shows excellent synergistic results in the prevention of the cast iron specimens, whilst as to the corrosion of the other metal specimens, similar results were obtained as when either PTTB or AZA was used.

EXAMPLE II

To show that azelaic acid is superior to other dibasic acids having 6-12 carbon atoms experiments were carried out using the same basic composition as above, to which 0.75%w of PTTB and 0.75%w of a dibasic acid have been added. The admixtures obtained were brought to a pH of 8 by means of sodium hydroxide, they were diluted with water to a 20%vol concentration and applied in the above corrosion test. The results are indicated in Table II.

4

TABLE II

Average weight loss per specimen in mg (ASTM D1384 at 20%v)

| Dibasic acid | Copper | Solder | Brass | Steel | Cast Iron | Aluminium |
|---|---|---|---|---|---|---|
| C6 Adipic acid | 2.6 | 4.3 | 3.5 | 0.9 | 177.7 | 2.4 |
| C7 Pimelic acid | 3.5 | 2.2 | 3.0 | 0.4 | 137.3 | 4.8 |
| C9 Azelaic acid | 2.6 | 1.3 | 3.5 | 0.9 | 11.4 | 3.3 |
| C10 Sebacic acid | 1.7 | 2.6 | 2.2 | 0.4 | 68.4 | 5.2 |
| C11 Undecane-dioic acid | 3.5 | 2.2 | 2.2 | 0.9 | 61.8 | 3.8 |
| C12 Dodecane-dioic acid | 3.0 | 3.5 | 3.0 | 0.9 | 80.8 | 4.3 |

From the above results it is apparent that especially in the prevention of corrosion of the cast iron metal specimens azelaic acid is by far superior to the other dibasic acids.

EXAMPLE III To show that acids other than PTTB are suitable, experiments were carried out using the same basic composition as in Examples I and II to which 0.75%w of AZA and 0.75%w of an aromatic acid according to the invention have been added. The pH was brought to 8 by means of sodium hydroxide. The admixtures were diluted with water to 20% vol concentration and applied in the corrosion test a described in Example I. For the sake of comparison also an experiment was carried out using benzoic acid. The results are shown in Table III.

Table III

Average weight loss per specimen in mg (ASTM D1384 at 20%v)

| | Copper | Solder | Brass | Steel | Cast Iron | Aluminium |
|---|---|---|---|---|---|---|
| Benzoic acid | 1.7 | 0.9 | 2.2 | 0.4 | 33.7 | + 2.9 |
| 4-methyl " | 2.2 | 0.1 | 3.5 | 0.4 | 20.9 | + 1.9 |
| 4-ethyl " | 0.9 | 0.4 | 1.7 | 4.3 | + 1.0 | + 1.9 |
| 4-phenyl " | 1.7 | 1.3 | 3.0 | 0.9 | 5.2 | + 2.4 |
| Cinnamic acid | 1.3 | 0.4 | 2.2 | 0.1 | 2.4 | + 3.3 |

From the above results it appears that the corrosion prevention of especially cast iron is considerably improved by using an alkyl- or aryl-substituted benzoic acid or an aromatic-substituted unsaturated carboxylic acid according to the present invention in comparison with benzoic acid.

**Claims**

1. Corrosion-inhibiting heat transfer composition comprising a water-miscible alcohol, a buffering agent, a salt of a monobasic organic acid and a salt of a $C_{7-13}$ dibasic acid, characterised in that the salt of the monobasic acid is an alkali metal or ammonium salt of alkyl or aryl-substituted benzoic acid or aromatic-substituted unsaturated carboxylic acid and the salt of the dibasic acid is an alkali metal or ammonium salt of azelaic acid.

2. Composition according to claim 1, in which further alkali metal or ammonium hydroxide is present whereby the amount of alkali metal or ammonium hydroxide is selected such that upon dilution of the composition with water in a volume ratio composition:water between 1:1 and 1:4 the admixture has a pH value between 7.5 and 9.5.

3. Composition according to claim 2 in which the substituted benzoic acid has alkyl moiety with 1 to 6 carbon atoms.

4. Composition according to claim 3 in which the alkyl moiety is a tert-butyl group.

5. Composition according to any one of claims 1-4, in which the weight ratio of the alkyl- or aryl-substituted benzoic acid or aromatic-substituted unsaturated carboxylic acid and azelaic acid is from 5:1 to 1:5, expressed as acids.

6. Composition according to any one of claims 1-5 in which the buffering agent is alkali metal metaborate and/or tetraborate.

7. Composition according to any one of claims 1-6, which further contains an alkali metal silicate and/or an alkali nitrate.

8. Composition according to any one of claims 1-7, in which the water-miscible alcohol is ethylene glycol, and/or diethylene glycol and/or propylene glycol.

9. Anti-freeze composition containing from 10 to 60% vol of the composition according to any one of claims 1-8 and from 90 to 40% vol of water.

**Revendications**

1. Composition de transfert de chaleur inhibant la corrosion, comprenant un alcool miscible avec l'eau, un agent de tamponnage, un sel d'un acide organique monobasique et un sel d'un acide organique dibasique en $C_{7-13}$, caractérisée en ce que le sel de l'acide monobasique est un sel de métal alcalin ou d'ammonium d'un acide alcoyl- ou aryl-benzoïque ou d'un acide carboxylique insaturé substitué par un groupe aromatique, et le sel de l'acide dibasique est un sel de métal alcalin ou d'ammonium de l'acide azélaïque.

2. Composition selon la revendication 1, dans laquelle en outre un hydroxyde de métal alcalin ou de l'hydroxyde d'ammonium est présent, la quantité d'hydroxyde de métal alcalin ou d'ammonium étant choisie de façon qu'après dilution de la composition avec de l'eau dans un rapport en volume composition:eau compris entre 1:1 et 1:4, le mélange ait un pH compris entre 7,5 et 9,5.

3. Composition selon la revendication 2, dans laquelle l'acide benzoïque substitué a une portion alcoyle de 1 à 6 atomes de carbone.

4. Composition selon la revendication 3, dans laquelle la portion alcoyle est un groupe tert-butyle.

5. Composition selon l'une quelconque des revendications 1-4, dans laquelle le rapport en poids de l'acide alcoyl- ou aryl-benzoïque ou de l'acide carboxylique insaturé substitué par un groupe aromatique à l'acide azélaïque est compris entre 5:1 et 1:5, exprimé en acides.

6. Composition selon l'une quelconque des revendications 1-5, dans laquelle l'agent de tamponnage est un métaborate et/ou un tétraborate de métal alcalin.

7. Composition selon l'une quelconque des revendications 1-6, qui contient en outre un silicate de métal alcalin et/ou un nitrate de métal alcalin.

8. Composition selon l'une quelconque des revendications 1-7, dans laquelle l'alcool miscible avec l'eau est de l'éthylène glycol et/ou du diéthylène glycol et/ou du propylène glycol.

9. Composition antigel contenant de 10 à 60 % en volume de la composition selon l'une quelconque des revendications 1-8 et de 90 à 40 % en volume d'eau.

**Patentansprüche**

1. Korrosionsverhindernde Zusammensetzung zur Wärmeübertragung, umfassend einen wassermischbaren Alkohol, ein Puffermittel, ein Salz einer einbasischen organischen Säure und ein Salz einer zweibasischen organischen $C_{7-13}$-Säure, dadurch gekennzeichnet, daß das Salz der einbasischen Säure ein Alkalimetall- oder Ammoniumsalz von Alkyl- oder Aryl-substituierter Benzoesäure oder aromatisch substituierter ungesättigter Carbonsäure ist und das Salz der zweibasischen Säure ein Alkalimetall- oder Ammoniumsalz von Azelainsäure ist.

2. Zusammensetzung nach Anspruch 1, worin zusätzlich Alkalimetall- oder Ammoniumhydroxid vorliegt, wobei die Menge an Alkalimetall- oder Ammoniumhydroxid so ausgewählt ist, daß bei Verdünnung der Zusammensetzung mit Wasser in eine Volumsverhältnis von Zusammensetzung:Wasser zwischen 1:1 und 1:4 das Gemisch einen pH-Wert zwischen 7,5 und 9,5 aufweist.

3. Zusammensetzung nach Anspruch 2, worin die substituierte Benzoesäure einen Alkyteil mit 1 bis 6 Kohlenstoffatomen aufweist.

4. Zusammensetzung nach Anspruch 3, worin der Alkyteil eine tertiäre Butylgruppe ist.

5. Zusammensetzung nach einem der Ansprüche 1 bis 4, worin das Gewichtsverhältnis der Alkyl- oder Aryl-substituierten Benzoesäure oder der aromatisch substituierten ungesättigten Carbonsäure zu Azelainsäure von 5:1 bis 1:5, ausgedrückt als Säuren, beträgt.

6. Zusammensetzung nach einem der Ansprüche 1 bis 5, worin das Puffermittel ein Alkalimetallmetaborat und/oder -tetraborat ist.

7. Zusammensetzung nach einem der Ansprüche 1 bis 6, welche zusätzlich ein Alkalimetallsilikat und/oder ein Alkalinitrat enthält.

8. Zusammensetzung nach einem der Ansprüche 1 bis 7, worin der wassermischbare Alkohol Ethylenglykol und/oder Diethylenglykol und/oder Propylenglykol ist.

9. Gefrierschutzmittelzusammensetzung mit eine Gehalt an 10 bis 60 Volums-% der Zusammensetzung nach einem der Ansprüche 1 bis 8 und an 90 bis 40 Volums-% Wasser.